# EUROPÄISCHE PATENTANMELDUNG

(11) **EP 0 595 767 A1**
(43) Veröffentlichungstag der Anmeldung: **04.05.1994**
(21) Anmeldenummer: 93810727.3
(22) Anmeldetag: 18.10.1993
(51) Int. Cl.: B65G 47/252

(54) **Vorrichtung zum Wenden von flachen Objekten**

(30) Priorität: 29.10.1992 CH 3372/92
(71) Anmelder: DE LA RUE GIORI S.A., CH-1003 Lausanne (CH)
(72) Erfinder: Sauer, Hartmut Karl, D-97267 Himmelstadt (DE)
(74) Vertreter: Jörchel, Dietrich R.A.

(57) **Zusammenfassung**

An der Förderstrecke (1), auf der die zu wendenden Objekte (2a, 2b) im gleichen Abstand voneinander durch Schieber (3a, 3b) bewegt werden, ist längs einer Wendezone ein Vorschubmechanismus mit einem Vorschuborgan in Form einer Federlamelle (5) vorgesehen, die periodisch aus einer Anfangsstellung relativ zur Fördergeschwindigkeit beschleunigt in eine Endstellung vor- und wieder in die Anfangsstellung zurückbewegt wird. Die über der Förderstrecke (1) angeordnete Federlamelle (5) hat einen gebogenen, bis zur Förderstrecke herabreichenden Abschnitt (5b), dessen konkave Seite in Förderrichtung weist. Zwischen den beiden erwähnten Stellungen der Federlamelle (5) sind auf der Förderstrecke (1) zwei in Querrichtung ausgerichtete Anschläge (6) befestigt, deren Höhe kleiner als die Höhe des Objekts ist und deren entgegengesetzt zur Förderrichtung weisende Seite in ihrem oberen Bereich eine geneigte Fläche (6a) aufweist. Die Anordnung ist so getroffen, dass ein Objekt (2b) an seiner Hinterkante vom Ende (5c) des gebogenen Federabschnitts (5b) untergriffen, beschleunigt gegen die Anschläge (6) vorgeschoben, dann hinten angehoben und, innerhalb des gebogenen Federabschnitts geführt, über den Anschlag nach vorn gekippt und unter der Wirkung der Federkraft der Federlamelle gewendet auf der Förderstrecke abgelegt wird, woraufhin es von den ursprünglichen Schiebern (3a) wieder übernommen wird.

## Beschreibung

Die Erfindung bezieht sich auf eine Vorrichtung zum Wenden von flachen Objekten, wie zum Beispiel von Wertscheinpaketen, gemäss dem Oberbegriff des Anspruchs 1.

Eine solche Vorrichtung ist in der EP-A-0 501 923 beschrieben.

Bisweilen ist es erforderlich, das auf einer Förderstrecke zwischen zwei Verarbeitungsstationen transportierte Fördergut zu wenden, derart, dass die ursprüngliche Oberseite der transportierten Objekte zur Unterseite wird, um beispielsweise die Orientierung des Objekts oder der das Objekt bildenden Einzelteile, im Falle von Wertscheinpaketen die Wertscheine, umzudrehen oder aber um die eine Aufschrift tragende Seite der die Objekte umgebenden Banderolen oder Verpackungen relativ zur Förderstrecke zu wechseln.

Bei der bisher bekannten Wendevorrichtung übernimmt ein Ueberholvorschub ein zu wendendes Objekt und schiebt es einer Wendeeinrichtung zu, in der die Vorderkante dieses Objekts angehoben und das Objekt über den Totpunkt hinaus so weit nach hinten gekippt wird, dass es anschliessend mit der ursprünglichen Oberseite nach unten auf die Förderstrecke zurückfällt, wo es von den ursprünglichen Schiebern dieser Förderstrecke wieder übernommen wird. Diese bekannte Wendevorrichtung arbeitet, ausser mit einem Vorschuborgan, mit einer in der Wendezone installierten, aufwärtsgekrümmten Rampe und einer daran anschliessenden, gebogenen Führungsbahn, die um eine Querachse kippbar gelagert und mit einem Ausgleichsgewicht versehen ist.

Nachteilig ist hierbei, dass das Ausgleichsgewicht, das den Kippunkt bestimmt, exakt auf das Fördergut eingestellt werden muss und dass sich die Objekte allein unter der Wirkung der Schwerkraft auf die Förderstrecke zurücklegen müssen. Der dabei entstehende Zeitverzug kann zu Störungen in der Förderstrecke führen.

Der vorliegenden Erfindung liegt die Aufgabe zugrunde, die bekannte Wendevorrichtung derart zu verbessern, dass einerseits die zum Wenden erforderlichen konstruktiven Mittel wesentlich vereinfacht sind und andererseits ein Zeitverzug beim Wenden ausgeschlossen wird, wobei ausserdem der Kippunkt nicht eingestellt werden muss.

Diese Aufgabe wird erfindungsgemäss durch die im kennzeichnenden Teil des Anspruchs 1 angegebenen Merkmale gelöst.

Auf diese Weise wird die Vorrichtung nicht nur konstruktiv vereinfacht, sondern es wird auch erreicht, dass ein Objekt beim eigentlichen Wendevorgang innerhalb des gebogenen Abschnitts der elastischen Federlamelle geführt und nach Ueberschreiten seiner aufrechten Hochkantstellung mit einstellbarer Federkraft gewendet auf der Förderstrecke abgelegt wird, wobei also das Kippen eines Objekts aus seiner aufrechten Hochkantstellung nach vorn nicht nur unter der Wirkung der Schwerkraft, sondern auch unter der Wirkung der geeignet gewählten Federkraft erfolgt.

Zweckmässige Ausgestaltungen der Erfindung ergeben sich aus den Unteransprüchen.

Die Erfindung wird anhand der Zeichnungen an einem Ausführungsbeispiel näher erläutert. Es zeigen :
Figuren 1 bis 3 schematische vereinfachte Seitenansichten einer Vorrichtung nach der Erfindung, wobei drei verschiedene Phasen des Wendevorgangs veranschaulicht werden,
Figur 4 eine Draufsicht auf die Vorrichtung in vergrösserter Darstellung, und
Figur 5 eine Darstellung, welche aufeinanderfolgende Stellungen eines flachen Objekts und der Federlamelle während eines Wendevorgangs veranschaulicht.

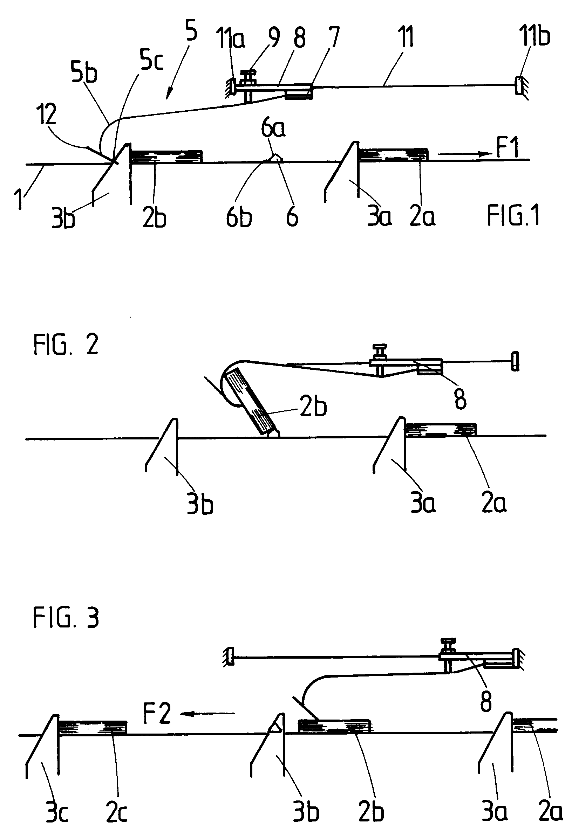

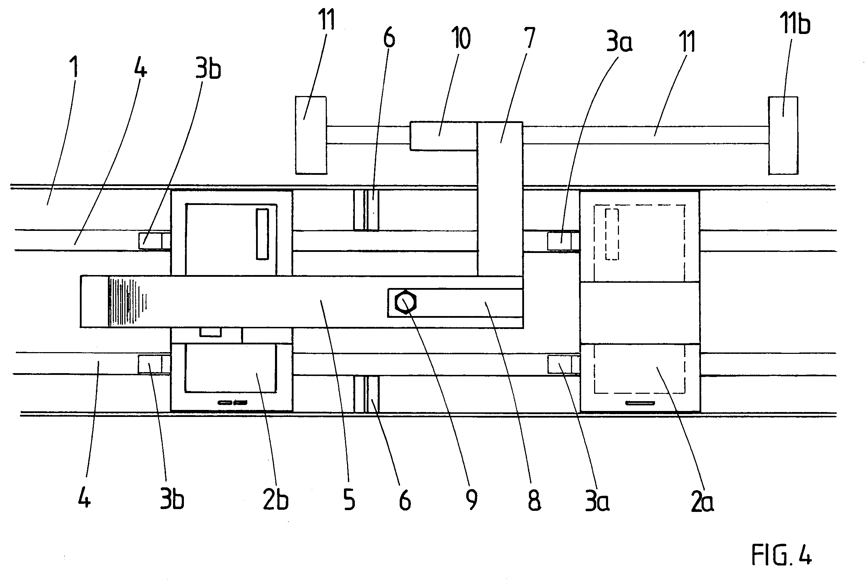

Nach den Figuren 1 bis 4 werden auf einer horizontalen Förderstrecke 1 flache Objekte, im betrachteten Beispiel banderolierte Wertscheinpakete 2a, 2b, 2c, mit Hilfe von Schiebern 3a, 3b, 3c transportiert, die sich mit konstanter Geschwindigkeit im Sinne des Pfeils F1 bewegen und gegen die Hinterkante der Wertscheinpakete stossen. Diese Schieber 3a, 3b, 3c sind im gleichen Abstand voneinander an einer unterhalb der Förderstrecke 1 angeordneten, gleichförmig bewegten Kette (nicht dargestellt) befestigt und ragen mit ihren oberen Enden durch Schlitze 4 (Figur 4) über die Ebene der Förderstrecke 1 hinaus.

Längs der in den Figuren 1 bis 4 dargestellten Wendezone befindet sich ein die Wertscheinpakete beschleunigender Vorschubmechanismus, welcher ein Vorschuborgan in Form einer Federlamelle 5 aufweist, die sich über der Förderstrecke 1 befindet und mit ihrem in Förderrichtung weisenden Ende an einer Traverse 7 eingespannt ist, welche die Förderstrecke überragt. Diese Traverse 7 erstreckt sich, wie Figur 4 zeigt, quer zur Förderrichtung über die eine Seite der Förderstrecke 1 hinaus und ist an einem Gleitstück 10 befestigt. Dieses Gleitstück ist längs einer parallel zur Förderstrecke 1 verlaufenden, fest montierten Führungsstange 11 zwischen einem hinteren Anschlag 11a und einem vorderen Anschlag 11b hin- und herverschiebbar. Beim Gleitstück 10 kann es sich um eine Hülse handeln, durch welche die Führungsstange 11 hindurchragt. Auf diese Weise kann sich die Federlamelle 5 oberhalb der Förderstrecke 1, parallel zu dieser, zwischen einer Anfangsstellung, die in Figur 1 gezeigt und durch den Anschlag lla definiert ist, und einer Endstellung, die in Figur 3 gezeigt und durch den Anschlag 11b definiert ist, hin- und herbewegen.

In Figur 1 ist das Wertscheinpaket 2a bereits gewendet, während das folgende Wertscheinpaket 2b eine Position kurz vor Uebernahme durch die Federlamelle 5 einnimmt. In Figur 2 befindet sich das Wertscheinpaket 2b in der Wendephase und in Figur 3 ist es gerade gewendet auf die Förderstrecke zurückgefallen.

Die Federlamelle 5 hat, ausgehend von ihrem Einspannende, einen im wesentlichen geradlinigen Abschnitt 5a, der sich näherungsweise parallel zur Förderstrecke 1 erstreckt und welcher in einen nach unten gebogenen Abschnitt 5b übergeht, dessen konkave Seite in Förderrichtung weist und welcher bis zur Förderstrecke herabreicht. Dieser gebogene Federabschnitt 5b hat im wesentlichen eine Kreisbogenform und ist so lang bemessen, dass sein auf der Förderstrecke 1 aufliegendes Ende 5c mit der Ebene der Förderstrecke einen kleinen Winkel bildet, so dass dieses Federende 5c beim beschleunigten Vorschub eines Wertscheinpakets dessen Hinterkante untergreifen kann. Im normalen Zustand, das heisst ausserhalb der eigentlichen Wendephase, ist der geradlinige Federabschnitt 5a vorzugsweise, wie Figur 1 zeigt, etwas nach unten geneigt. Durch eine Vorspanneinrichtung in Form einer Schraube 9, die an einer mit der Traverse 7 befestigten kleinen Platte 8 angebracht ist, kann die Federlamelle 5 nach unten vorgespannt werden. Mit dieser Schraube 9, welche im kleinen Abstand vom Einspannende der Federlamelle 5 auf deren Abschnitt 5a wirkt, lässt sich also die Vorspannung der Federlamelle und damit die Kraft, mit welcher das Federende 5c nach unten bzw. gegen die Förderstrecke 1 gedrückt wird, einstellen.

Wie Figur 4 zeigt, befindet sich die Federlamelle 5 wenigstens näherungsweise in der Mitte über der Förderstrecke 1 zwischen den beiden Schlitzen 4 und kann eine Breite von insbesondere 15 bis 30%, vorzugsweise etwa 20% der Abmessung des Wertscheinpakets quer zur Förderrichtung haben.

Zur Durchführung des eigentlichen Wendevorgangs sind auf der Förderstrecke 1 zwei Anschläge 6 vorgesehen, welche im Abstand voneinander auf den beiden seitlichen Bereichen der Förderstrecke 1, ausserhalb der beiden Schlitze 4, befestigt und in Querrichtung miteinander ausgerichtet sind. Wie die Figuren 1 bis 3 zeigen, ist der Abstand der Anschläge 6 von der Anfangsstellung des Federendes 5c (Figur 1) ungefähr doppelt so gross wie der Abstand zur Endstellung dieses Federendes (Figur 3). Jeder Anschlag 6 hat die Form eines Prismas, dessen Scheitellinie quer zur Förderrichtung liegt und das, ausgehend von dieser Scheitellinie, beidseitig geneigte Flächen 6a und daran anschliessende, senkrecht zur Förderebene orientierte Flächen 6b aufweist. Die Höhe eines Anschlags kann 1/2 bis 9/10 der Höhe eines flach auf der Förderstrecke liegenden Wertscheinpakets, also der Dicke dieses Wertscheinpakets, betragen, wird aber vorzugsweise zu etwa 2/3 der Dicke des Wertscheinpakets gewählt. Der Winkel, den die erwähnten geneigten Flächen 6a des Prismas mit der Förderebene einschliessen, kann zwischen 30° und 60° liegen und beträgt vorzugsweise etwa 45° Die senkrecht zur Förderebene orientierten Flächen 6b der Anschläge können eine Höhe von 1/5 bis 3/5 der Gesamthöhe des Anschlags haben, vorzugsweise wird diese Höhe zu etwa 1/3 der Gesamthöhe des Anschlags gewählt.

Bei einer abgewandelten Form der Anschläge braucht auf der in Förderrichtung weisenden Seite keine senkrecht zur Förderebene gerichtete Fläche vorhanden zu sein, sondern es genügt dort auch eine stetige geneigte Fläche.

Anstatt zwei in Seitennähe der Förderstrecke angeordnete Anschläge 6 vorzusehen, kann im Prinzip auch nur ein einziger in der Mitte angeordneter Anschlag verwendet werden, oder es können mehrere Anschläge vorgesehen sein. Es ist natürlich lediglich darauf zu achten, dass bei Förderstrecken mit Schiebern der Weg dieser Schieber nicht durch die Anschläge behindert wird.

Mit Hilfe einer bekannten Antriebseinrichtung führt die Traverse 7 mit der Federlamelle 5, also dem Vorschuborgan, periodisch eine Hin- und Herbewegung aus, die, ausgehend von der in Figur 1 gezeigten Anfangsstellung, in Richtung des Pfeils F1 nach vorn bis zu der in Figur 2 dargestellten Endstellung der Federlamelle 5 und von dort wieder im Sinne des Pfeils F2 zurück in die Anfangsstellung verläuft. Dabei werden die Hinbewegung und die Rückbewegung der Federlamelle derart in Bezug auf die Fördergeschwindigkeit der Schieber 3a, 3b, 3c beschleunigt, dass die Periode für einen vollen Bewegungszyklus des Vorschuborgans gleich dem Quotienten aus dem Abstand zweier aufeinanderfolgender Schieber, also aufeinanderfolgende Objekte 2a, 2b, und der Fördergeschwindigkeit ist. Das heisst, dass zwischen den beiden Zeitpunkten, in denen das Federende 5c zwei aufeinanderfolgende Anfangsstellungen (Figur 1) einnimmt, ein Schieber bzw. ein Wertscheinpaket gerade eine dem Abstand zweier aufeinanderfolgender Schieber entsprechende Strecke zurückgelegt hat.

Die Bewegung der Federlamelle 5 ist mit der Fördergeschwindigkeit der Schieber derart synchronisiert, dass sich in der Anfangsstellung der Federlamelle 5 die Schubfläche eines Schiebers, im betrachteten Beispiel nach Figur 1 des Schiebers 3b, der das Wertscheinpaket 2b vorbewegt, unmittelbar vor dem Ende 5c der Federlamelle 5 befindet, die aus dieser Lage heraus in Vorwärtsrichtung F1 beschleunigt wird und einen Ueberholvorschub für das betreffende Wertscheinpaket bewirkt.

Die Antriebseinrichtung für die Traverse 7 mit der Federlamelle 5 ist mit der die Schieber bewegenden Förderkette gekuppelt und in der bereits erwähnten EP-A-0 501 923 beschrieben.

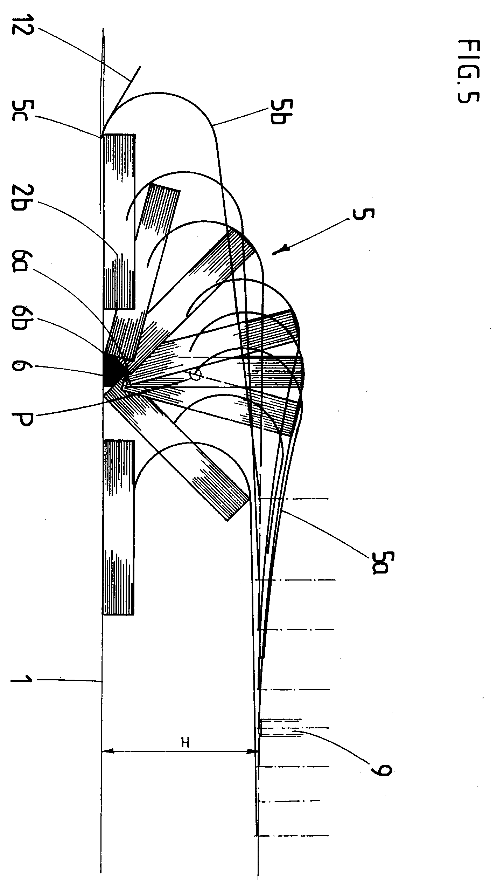

Der Durchmesser des gebogenen Federabschnitts 5b kann 3/5 bis 4/5 der Abmessung eines Wertscheinpakets in Förderrichtung, das heisst der Höhe eines hochkant aufgerichteten Wertscheinpakets, betragen, vorzugsweise ungefähr 2/3 dieser Abmessung. Dadurch wird erreicht, dass die Federlamelle 5 beim Wendevorgang nach oben gebogen und dabei stärker gespannt wird. Ferner wird vorzugsweise die Höhe H der von der Vorspanneinrichtung, im betrachteten Beispiel der Schraube 9, beaufschlagten Federstelle über der Förderebene (Figur 5), das heisst die Höhe des Federdruckpunkts, etwas niedriger gewählt als die Höhe des beim Wendevorgangs hochkant aufgerichteten Wertscheinpakets. Für den Fall, dass die Wertscheinpakete Banknotenbündel sind, ist H um 5 bis 15 mm, vorzugsweise etwa 10 mm, geringer als die Höhe des hochkant stehenden Wertscheinpakets. Diese Höhe H bestimmt also die Auslenkung des geradlinigen Abschnitts 5a der Federlamelle beim Wendevorgang und damit die Federkraft, die auf das Wertscheinpaket wirkt, wenn es die Hochkantstellung passiert.

Wenn keine auf den geradlinigen Federabschnitt 5a wirkende Vorspanneinrichtung vorgesehen ist, dann bezieht sich die vorstehende Erläuterung auf die Höhe H der Befestigungsstelle der Federlamelle über der Förderebene.

Der Wendevorgang verläuft folgendermassen : Wenn die Federlamelle 5 nach Durchlaufen ihrer Startstellung (Figur 1) beschleunigt wird, übernimmt das Federende 5c das bisher vom Schieber 3b bewegte Wertscheinpaket 2b, welches nunmehr beschleunigt bis zu den Anschlägen 6 bewegt wird. Hier stösst das Wertscheinpaket 2b mit seiner Vorderkante gegen die untere senkrechte Fläche 6b der Anschläge 6 und wird nunmehr durch das Federende 5c, welches die Hinterkante dieses Wertscheinpakets untergreift, an seiner Rückseite angehoben und nach vorn gekippt, wie schematisch in Figur 5 dargestellt. Während dieser Kippbewegung wird das Wertscheinpaket innerhalb des gebogenen Abschnitts 5a der Federlamelle geführt, dabei bis in seine Hochkantstellung aufgerichtet, über die Anschläge 6 umgeschlagen und unter der Wirkung der Federkraft der Federlamelle gewendet auf der Förderstrecke abgelegt, woraufhin es die ursprünglichen Schieber 3b wieder übernehmen.

Beim Aufrichten des Wertscheinpakets und beim Passieren seiner Hochkantstellung wird die Federlamelle 5 durch das Wertscheinpaket nach oben gebogen, so dass die auf das Wertscheinpaket wirkende Federkraft zunächst etwas zu- und dann wieder abnimmt. Wesentlich ist, dass das Wertscheinpaket während des Wendens durch die Gestalt des gebogenen Federabschnitts und die ständig wirkende Federkraft zwangsweise geführt wird und damit eine definierte Kippbewegung ausführt.

Aus Figur 5 geht hervor, dass das Federende 5c erst an der Rückseite des Wertscheinpakets zur Anlage kommt und den Wendevorgang unterstützt, nachdem sich das Wertscheinpaket mehr als 90°, also über seine Hochkantstellung hinaus, gedreht hat. Diese Stelle, an der das Federende 5c gegen das Wertscheinpaket stösst, ist in Figur 5 mit dem Punkt P bezeichnet.

Das Umkippen des Wertscheinpakets aus der Hochkantstellung nach vorn erfolgt also nicht nur unter der Wirkung der Schwerkraft, sondern auch unter der Wirkung der Federkraft.

Die senkrecht zur Förderstrecke orientierte Fläche 6b der Anschläge 6 verhindert, dass die Vorderkante des Wertscheinpakets während der ersten Phase der Kippbewegung auf der geneigten Anschlagsfläche 6a hochgleiten kann, und gleichzeitig bildet die horizontale Kante zwischen der senkrechten Fläche 6b und der geneigten Fläche 6a der Anschläge beim Aufwärtskippen des Wertscheinpakets eine Art Kippachse. Darüberhinaus unterstützen die beiden symmetrisch geneigten Flächen 6a der Anschläge eine korrekte Kippbewegung, welche durch eine geeignete Einstellung der Höhe H und der Federkraft der Federlamelle 5 in Abhängigkeit von der Grösse und dem Gewicht des zu wendenden Objekts gewährleistet wird. Diese Einstellung ist jedoch nicht sehr kritisch.

Wenn die Federlamelle ihre Endstellung (Figur 3) eingenommen hat, liegt das Wertscheinpaket gewendet flach auf der Förderstrecke 1, und die Federlamelle 5 stützt sich mit ihrem Ende 5c auf diesem Wertscheinpaket ab, bevor ihre Rückbewegung in ihre Anfangsstellung erfolgt. Dabei gleitet sie über das nachfolgende Wertscheinpaket 2c hinweg bis in ihre in Figur 1 dargestellte Anfangsstellung, in welcher sich das Federende 5c hinter diesem Wertscheinpaket 2c befindet, woraufhin dieses folgende Wertscheinpaket 2c, wie beschrieben, gewendet und dann wieder von den ursprünglichen Schiebern 3c zum Weitertransport übernommen wird.

Damit die Federlamelle bei ihrer Rückbewegung leichter über ein Wertscheinpaket hinweggleiten kann, ist am Ende dieser Federlamelle ein geneigtes Auflaufblech 12 befestigt.

Durch den Betrieb der Wendevorrichtung nach der Erfindung wird die korrekte Sequenz der Wertscheinpakete nach dem Wenden auf der Förderstrecke nicht verändert, und der Wendevorgang verursacht auch keinen Zeitverlust beim Transport. Selbstverständlich lässt sich die Vorrichtung nach der Erfindung zum Wenden beliebiger flacher Objekte anwenden und ist nicht auf das beschriebene Ausführungsbeispiel beschränkt, sondern lässt insbesondere hinsichtlich der Ausbildung des oder der Anschläge sowie der Federlamelle, ihrer Befestigung sowie der Mittel zum Einstellen der Federvorspannung mannigfache Varianten zu.

## Patentansprüche

1. Vorrichtung zum Wenden von flachen Objekten (2a, 2b, 2c), wie zum Beispiel von Wertscheinpaketen, die als Fördergut auf einer Förderstrecke (1) mit Hilfe von Schiebern (3a, 3b, 3c) gleichförmig transportiert werden, mit einem wenigstens näherungsweise parallel zur Förderstrecke bewegtem Vorschuborgan (5), welches die Objekte längs einer Wendezone relativ zur Fördergeschwindigkeit beschleunigt und von einer Antriebseinrichtung periodisch aus einer Startstellung in eine Endstellung vor- und wieder in die Startstellung zurückbewegt wird, wobei die Bewegungsperiode durch den Quotienten aus dem Abstand aufeinanderfolgender Objekte auf der Förderstrecke und der Fördergeschwindigkeit gegeben ist, und mit vor der erwähnten Endstellung angeordneten Mitteln zum Wenden, dadurch gekennzeichnet, dass das Vorschuborgan eine Federlamelle (5) mit einem gebogenen, bis zur Förderstrecke (1) herabreichenden Abschnitt (5b) ist, dessen konkave Seite in Förderrichtung weist und dessen Ende (5c) beim beschleunigten Vorschub eines Objekts dessen Hinterkante untergreift, und dass die Mittel zum Wenden aus wenigstens einem aus der Förderebene herausragenden, festen Anschlag (6) bestehen, dessen Höhe kleiner als die Höhe eines Objekts ist und dessen entgegengesetzt zur Förderrichtung weisende Seite wenigstens in ihrem oberen Bereich eine in Förderrichtung geneigte Fläche (6a) aufweist, derart, dass beim Auftreffen der Vorderkante eines Objekts am Anschlag (6) dieses Objekt an seiner Hinterkante von der stossenden Federlamelle (5) angehoben und, innerhalb des gebogenen Lamellenabschnitts (5b) geführt, über den Anschlag nach vorn gekippt und unter der Wirkung der Federkraft der Federlamelle (5) gewendet auf der Förderstrecke (1) abgelegt wird.

2. Vorrichtung nach Anspruch 1, dadurch gekennzeichnet, dass die Höhe des Anschlags (6) 1/2 bis 9/10, vorzugsweise etwa 2/3 der Höhe eines Objektes beträgt und dass der Winkel, den die erwähnte geneigte Fläche (6a) mit der Förderebene einschliesst, zwischen 30° und 60°, vorzugsweise etwa 45° beträgt.

3. Vorrichtung nach Anspruch 1 oder 2, dadurch gekennzeichnet, dass der Anschlag (6) auf seiner entgegengesetzt zur Förderrichtung weisenden Seite im unteren Bereich eine senkrecht zur Förderebene orientierte Fläche (6b) hat, an welche sich die erwähnte geneigte Fläche (6a) anschliesst, wobei die Höhe der senkrecht orientierten Fläche 1/5 bis 3/5, insbesondere 1/3 der Gesamthöhe des Anschlags beträgt und wobei vorzugsweise der Anschlag (6) die Form eines Prismas mit von seiner Scheitellinie ausgehenden, beidseitig geneigten Flächen (6a) und daran anschliessenden, senkrecht zur Förderebene orientierten Flächen (6b) aufweist.

4. Vorrichtung nach einem der Ansprüche 1 bis 3, dadurch gekennzeichnet, dass der gebogene Abschnitt (5b) der Federlamelle im wesentlichen kreisbogenförmig ist und einen Durchmesser hat, der 3/5 bis 4/5, vorzugsweise etwa 2/3 der Abmessung eines Objekts in Förderrichtung beträgt, und dass die Federlamelle (5) so ausgebildet und befestigt ist, dass sie beim Wenden eines Objekts von diesem elastisch von der Förderstrecke (1) weg nach oben biegbar ist, wenn das Objekt seine aufrechte Hochkantstellung passiert.

5. Vorrichtung nach einem der Ansprüche 1 bis 4, dadurch gekennzeichnet, dass die Federlamelle (5) mit ihrem in Förderrichtung weisenden Ende an einer die Förderstrecke (1) überragenden Traverse (7) befestigt ist, welche von der erwähnten Antriebseinrichtung periodisch bewegbar ist, und dass die Federlamelle (5), ausgehend von ihrer Befestigungsstelle, einen entgegengesetzt zum Fördersinne gerichteten, im wesentlichen geradlinigen Abschnitt (5a) hat, an den sich der erwähnte gebogene Lamellenabschnitt (5b) anschliesst.

6. Vorrichtung nach einem der Ansprüche 1 bis 5, dadurch gekennzeichnet, dass die Federkraft, mit welcher die Federlamelle (5) in Richtung auf die Förderstrecke (1) vorgespannt ist, mittels einer Einstellvorrichtung, beispielsweise einer Schraube (9), einstellbar ist.

7. Vorrichtung nach Anspruch 5 oder 6, dadurch gekennzeichnet, dass die Höhe der Befestigungsstelle der Federlamelle bzw., bei Vorhandensein einer Vorspanneinrichtung, die Höhe H des Druckpunktes dieser Vorspanneinrichtung (9) über der Förderstrecke (1) etwas geringer als die Höhe des Objekts in seiner aufgerichteten Hochkantstellung, im Falle, dass die Objekte Banknotenbündel sind, um 5 bis 15 mm, vorzugsweise um etwa 10 mm geringer ist.

8. Vorrichtung nach einem der Ansprüche 1 bis 7, dadurch gekennzeichnet, dass am freien Ende (5c) der Federlamelle (5) ein sich entgegengesetzt zur Förderrichtung erstreckendes, geneigtes Auflaufblech (12) befestigt ist, das bei der Rückbewegung der Federlamelle auf dem nachfolgenden Objekt gleitet.

9. Vorrichtung nach einem der Ansprüche 1 bis 8, dadurch gekennzeichnet, dass zwei im Abstand voneinander und in Querrichtung ausgerichtete Anschläge (6) auf der Förderstrecke vorgesehen sind, die sich vorzugsweise in Querrichtung jeweils über 1/10 bis 2/10 der Abmessung eines Objekts in Querrichtung erstrecken und im Falle des Vorhandenseins von in der Förderstrecke (1) vorgesehenen Schlitzen (4) zum Durchtritt der Schieber (3a, 3b, 3c) jeweils auf den Seitenbereichen der Förderstrecke zwischen einem Förderstreckenrand und einem Schlitz angeordnet sind.

10. Vorrichtung nach einem der Ansprüche 1 bis 9, dadurch gekennzeichnet, dass die Federlamelle (5) quer zur Förderrichtung eine Breite von 15% bis 30%, vorzugsweise von etwa 20% der Querabmessung eines Objekts aufweist und oberhalb der Mitte der Förderstrecke angeordnet ist.
